(19) Europäisches Patentamt
European Patent Office
Office européen des brevets

(11) **EP 2 902 538 B1**

(12) **EUROPEAN PATENT SPECIFICATION**

(45) Date of publication and mention
of the grant of the patent:
**07.03.2018 Bulletin 2018/10**

(51) Int Cl.:
*D04H 3/007* (2012.01)  *D01F 6/46* (2006.01)
*D04H 3/16* (2006.01)  *D01F 1/10* (2006.01)
*D01F 6/06* (2006.01)

(21) Application number: **13840229.2**

(22) Date of filing: **26.09.2013**

(86) International application number:
**PCT/JP2013/076061**

(87) International publication number:
**WO 2014/050965 (03.04.2014 Gazette 2014/14)**

(54) **SPUN-BONDED NON-WOVEN FABRIC**

SPINNVLIESSTOFF

TISSU NON TISSÉ PAR FILAGE DIRECT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.09.2012 JP 2012213925**

(43) Date of publication of application:
**05.08.2015 Bulletin 2015/32**

(73) Proprietor: **Mitsui Chemicals, Inc.
Tokyo 105-7117 (JP)**

(72) Inventors:
• **KUNIMOTO, Naosuke**
**Sodegaura-shi**
**Chiba 299-0265 (JP)**
• **SUZUKI, Kenichi**
**Sodegaura-shi**
**Chiba 299-0265 (JP)**
• **KAWAKAMI, Yoshihisa**
**Sodegaura-shi**
**Chiba 299-0265 (JP)**
• **OTA, Kosuke**
**Sodegaura-shi**
**Chiba 299-0265 (JP)**

(74) Representative: **Hoffmann Eitle
Patent- und Rechtsanwälte PartmbB
Arabellastraße 30
81925 München (DE)**

(56) References cited:
EP-A1- 1 369 518       EP-A1- 2 116 367
EP-A1- 2 145 915       WO-A1-2006/051708
WO-A1-2009/001871     WO-A2-2009/012073
JP-A- H08 246 232      JP-A- 2002 105 828
JP-A- 2002 129 457     JP-A- 2010 168 713
JP-B2- 4 212 764       US-A1- 2009 098 786

EP 2 902 538 B1

**Description**

TECHNICAL FIELD

The present invention relates to a spunbond nonwoven fabric containing polypropylene, which is excellent in flexibility, bending resistance, texture and strength, and particularly relates to a polypropylene spunbond nonwoven fabric, which can be suitably used for a wide variety of applications, especially as a material for absorbent articles, such as a disposable diaper and the like.

BACKGROUND ART

Recently, nonwoven fabrics are used for a wide variety of applications because of their excellent air permeability and flexibility. Accordingly, nonwoven fabrics are required to have a wide variety of properties in accordance with the applications thereof and to improve the properties. For example, nonwoven fabrics are broadly used as surface sheets for absorbent articles, such as a paper diaper, a sanitary napkin and the like, which are required to have the absorption ability that allows liquid such as expelled or excreted menstrual blood or urine to be quickly transferred to an absorbent body and/or a surface property that gives a wearer a sense of flexibility and less stimulation at a part of the skin in contact with any of those articles. Meanwhile, nonwoven fabrics are also broadly used as back sheets, which are required to have the water-resisting property that keeps a liquid absorbed in an inner absorbent body from leaking outside as well as the moisture permeation ability that allows the moisture inside an absorbent article to permeate and to be dispersed outside in order to prevent stuffiness due to the moisture generated on the inward side of an absorbent article. Furthermore, because this back sheet constitutes the surface of an absorbent article, the back sheet is required to have excellent feeling and good texture.

Thermoplastic resin-based filament nonwoven fabrics, such as spunbond nonwoven fabrics, have been used in a variety of fields because of their feasibility of continuous spinning, good productivity as well as their excellent characteristics including mechanical properties, such as high tensile strength; bending resistance, air permeability, and the like. From the viewpoint of the feasibility of melt spinning, fiber properties and the like, polyamide resins, polyester resins or polyolefin resins are employed as thermoplastic resins used in these filament nonwoven fabrics and polyolefin resins are widely used especially for absorbent articles, which polyolefin resins are inexpensive and excellent in processability. Furthermore, resin compositions, in which any other resin and/or a lubricant are added to a polyolefin resin with the purpose of improving texture, have been widely used.

Spun-bonded nonwoven fabrics described in JP-A-2001-226865 (Patent Literature 1) and JP-A-2002-69820 (Patent Literature 2) and the like are known as examples of a spunbond nonwoven fabric produced by using a resin composition containing a polyolefin resin and a lubricant. Patent Literature 1 has disclosed a spunbond nonwoven fabric having a static friction coefficient in a range of 0.1 to 0.4, which is produced from a polyolefin resin, and particularly from a polypropylene resin. In addition, Patent Literature 1 has disclosed that the nonwoven fabric contains a fatty acid amide compound as a lubricant. Patent Literature 2 has also disclosed a polyolefin nonwoven fabric, in which a fatty acid amide compound, particularly erucic acid amide, as a lubricant is contained.

Out of resin compositions each containing a polyolefin resin and any other resin, a resin composition containing an $\alpha$-olefin polymer selected for the other resin is known to be used in spunbond nonwoven fabrics described in JP-A-1993-194802 (Patent Literature 3), JP-A-2002-146631 (Patent Literature 4), JP-A-2005-126858 (Patent Literature 5) and JP-A-2008-524387 (Patent Literature 6).

Moreover, the present applicant have disclosed a spunbond nonwoven fabric in WO2012/07518 (Patent Literature 7) as well, in which a resin composition containing a low-crystalline polypropylene selected for the other resin was used out of the above-described resin compositions.

JP 2002-105828 A is concerned with a flexible nonwoven fabric, which is prepared by a spunbonding process. The fabric is based on 100 parts by weight of a propylene resin, which is a propylene/ethylene copolymer with an ethylene content of 2.0 to 10.0 mol%, or a propylene/ethylene/1-butene copolymer having an ethylene content of 1.0 to 5.0 mol% and a 1-butene content of 1.0 to 5.0 mol%. The propylene resin has a melting point of 125 to 150°C and a molecular weight distribution Mw/Mz of 3 or less. The nonwoven fabric further contains 0.01 to 5 parts by weight of a fatty acid amide. The Examples use erucic acid amide.

US 2009/098786 A1 describes a polypropylene resin that is supposed to allow for high-speed spinning. The polypropylene resin is formed by blending a high crystalline polypropylene resin and a low crystalline polypropylene resin. The polypropylene resin has a melt flow rate (MFR) of 6 to 100 g/10 minutes, a molecular weight distribution (Mw/Mn), measured by gel permeation chromatography, of 3 to 6, and a 116°C non-eluted component content (100-W116(%)) of 50% or more and a content of components eluted at 90°C or less (W90) of 10 to 30%, measured by temperature-rising fractional chromatography (TREF).

Recently, fabrics for use in hygiene materials and the like, such as a paper diaper, a sanitary napkin and the like, are required to improve the flexibility, in which less naps are raised and a balance among their texture, sense of softness and sense of smoothness is achieved, and the like. Thus, spunbond nonwoven fabrics having excellent texture and strength as well as the flexibility as described above are desired to appear.

CITATION LIST

PATENT LITERATURES

Patent Literature 1: JP-A-2001-226865
Patent Literature 2: JP-A-2002-69820
Patent Literature 3: JP-A-1993-194802
Patent Literature 4: JP-A-2002-146631
Patent Literature 5: JP-A-2005-126858
Patent Literature 6: JP-A-2008-524387
Patent Literature 7: WO2012/07518

SUMMARY OF INVENTION

TECHNICAL PROBLEM

In Patent Literatures 1 and 2, erucic acid amide is used as a lubricant. However, when erucic acid amide was likewise used as a lubricant, the flexibility of a nonwoven fabric was insufficient and a problem associated with productivity arose, in which problem the slipping property thereof was extremely enhanced so that the nonwoven fabric could be hardly processed.

In Patent Literatures 3, 4, 5 and 6, a resin composition in which an $\alpha$-olefin copolymer or a low-crystalline polypropylene is added to a propylene polymer is used to improve the flexibility of a nonwoven fabric. In this case, however, the added $\alpha$-olefin copolymer or low-crystalline polypropylene is separated from fibers, which form a spunbond nonwoven fabric, and deposited on the surface of the fibers, which causes a problem that impairs the texture of the nonwoven fabric. Moreover, these literatures describe the addition of a lubricant but not a specific lubricant and do not suggest any specific effect of the addition thereof.

TECHNICAL SOLUTION

The object of the present invention is to provide a spunbond nonwoven fabric containing polypropylene, which achieves excellent balance among its flexibility, texture, and strength.

The present inventors found that the spunbond nonwoven fabric of claim 1 has these desired properties

ADVANTAGEOUS EFFECTS OF INVENTION

A spunbond nonwoven fabric of the present invention contains a propylene polymer (A) having a melting point of not less than 120°C as well as a fatty acid amide having not less than 15 and not more than 21 carbon atoms so that the spunbond nonwoven fabric achieves a good balance among its texture, sense of softness and sense of smoothness and has high flexibility. Furthermore, as a propylene polymer (B) having a melting point of less than 120°C is contained therein, the obtained nonwoven fabric has high flexibility, high bending resistance, and good texture. Additionally, the spunbond nonwoven fabric of the present invention has characteristics, in addition to such flexibility, such as difficulty in raising naps, high strength and excellent workability, and is therefore suitable for use in a sanitary napkin, a paper diaper and the like.

DESCRIPTION OF EMBODIMENT

<A propylene polymer (A) having a melting point of not less than 120°C>

A propylene polymer (A), which is a component of a spunbond nonwoven fabric of the present invention, has a melting point of not less than 120°C and preferably of 120-170°C, which melting point is measured by a differential scanning calorimeter. The propylene polymer (A) according to the present invention has crystalline properties and a polypropylene whose isotactic index (I.I.) (the insoluble fraction in boiling n-heptane) is preferably not less than 75% by weight and more preferably 75-99% by weight is preferred to be used as the propylene polymer (A).

Moreover, the melt flow rate (measured at 230°C with a load of 2160 g in accordance with ASTM D1238) of a propylene polymer (A) is in a range of 1-300 g/10 min, and preferably of 2-200 g/10 min. The melt flow rate in this range enables melt spinning to be performed.

The propylene polymer (A) may be either a propylene homopolymer or a random copolymer composed of propylene and an α-olefin, or a combination of a propylene homopolymer and a random copolymer composed of propylene and an α-olefin. The propylene polymer (A) is preferably a propylene homopolymer from the viewpoint of the strength of a nonwoven fabric to be obtained. Moreover, the combinational use of a random copolymer composed of propylene and an α-olefin with a propylene homopolymer allows the texture to be improved. In this case, provided that the random copolymer and the propylene homopolymer are considered to be 100% by weight in total, the content of the random copolymer should be in a range of 0.1 to 30% by weight.

Moreover, a block polypropylene may be used as the polymer (A). A conventionally known propylene polymer may be used as such a propylene polymer (A) and is easily available in the market. Examples of a propylene homopolymer include, for example, "Prime Polypro S119" (product name; produced by Prime Polymer Co., Ltd.) and the like. Moreover, examples of a copolymer composed of propylene and ethylene include Vistamaxx VM2125 (product name; produced by Exxon Mobil Co.) and the like.

The propylene polymer (A) can be produced by a known method, using a solid titanium catalyst (Ziegler catalyst) component or a metallocene compound catalyst component each of which is conventionally known.

In the present invention, a combination of the propylene polymer (A) and a propylene polymer (B) shown below is used because the flexibility, bending resistance, and texture of a nonwoven fabric to be obtained are especially excellent.

<A propylene polymer (B) having a melting point of less than 120°C>

A propylene polymer (B) used in the present invention is a propylene polymer having a melting point of less than 120°C and may be either a propylene homopolymer or a copolymer composed of propylene and an α-olefin having two or 4-20 carbon atoms. Among them, in the present invention, a propylene homopolymer or a copolymer composed of propylene and an α-olefin having 4-20 carbon atoms is preferred as the propylene polymer (B).

The melting point (Tm) measured with a differential scanning calorimeter is less than 120°C, preferably not more than 110°C, more preferably 50-100°C, further preferably 55-85°C, and most preferably 60-80°C.

Moreover, the melt flow rate (measured at 230°C with a load of 2160 g in accordance with ASTM D1238) of the propylene polymer (B) is in a range of 1-1000 g/10 min, preferably of 2-500 g/10 min, further preferably of 2-250 g/10 min, and most preferably of 2-150 g/10 min. The melt flow rate in this range allows a nonwoven fabric obtained by combining the propylene polymer (B) with the propylene polymer (A) to be excellent in flexibility, bending resistance, and texture.

In cases where a copolymer composed of propylene and an α-olefin having 4-20 carbon atoms is used as the propylene polymer (B), examples of the α-olefin include, specifically, 1-butene, 1-pentene, 1-hexene, 1-heptene, 1-octene, 1-decene, 1-dodecene, 1-hexadecene, 4-methyl-1-pentene and the like. Among them, 1-butene is preferred.

The content of the α-olefin in the copolymer is not particularly limited as long as the melting point (Tm) of a propylene polymer to be obtained is within the above-described range, and is typically in a range of 0.1% by mole or more and less than 90% by mole, preferably in a range of 1-80% by mole, further preferably in a range of 5-80% by mole, and most preferably in a range of 15-75% by mole. Examples of such a propylene polymer include TAFMER XM-7070 (product name; produced by Mitsui Chemicals, Inc.) and the like.

Moreover, in cases where a propylene homopolymer is used as the propylene polymer (B), the propylene homopolymer is preferred to be a low-crystalline polypropylene satisfying the following conditions (A) to (f).

(A) [mmmm] = 20-60% by mole:

Generation of stickiness is reduced when the *meso* pentad fraction [mmmm] of a low-crystalline polypropylene is not less than 20% by mole. The crystallinity is not extremely increased and therefore the elastic recovery property is enhanced when the *meso* pentad fraction [mmmm] of a low-crystalline polypropylene is not more than 60% by mole. The *meso* pentad fraction [mmmm] is preferably 30-50% by mole and more preferably 40-50% by mole.

The terms "*meso* pentad fraction" [mmmm], "*racemic* pentad fraction" [rrrr] and "*racemic meso racemic meso* pentad fraction" [rmrm], the latter two of which are recited below, refer to fractions of pentads in the *meso* configuration, in the *racemic* configuration and in the *racemic meso racemic meso* configuration in a polypropylene molecular chain, respectively, which fractions are determined based on signals of methyl groups in $^{13}$C-NMR spectra in accordance with the method proposed by A. Zambelli et al. in "Macromolecules, 1973, 6, 925". An increased *meso* pentad fraction [mmmm] means increased tacticity. Moreover, the below-described triad fractions in [mm], [rr] and [mr] were also calculated based on the above-described method.

In addition, the determination of $^{13}$C-NMR spectrum can be performed with reference to the identification of peaks proposed by A. Zambelli et al. in "Macromolecules, 1975, 8, 687" and using the following apparatus and conditions:

Apparatus: 13C-NMR spectrometer, type JNM-EX400, produced by JEOL Ltd.;
Method: the complete proton decoupling method;
Concentration: 220 mg/ml;
Solvent: a mixture solvent composed of 1,2, 4-trichlorobenzene and deuterated benzene with a ratio of 90:10 (volume ratio);
Temperature: 130°C;
Pulse width: 45°;
Pulse repetition time: 4 seconds;
Scan number: 10000 times;

<Calculation formula>

$$M = m/S \times 100;$$

$$R = \gamma/S \times 100;$$

$$S = P\beta\beta + P\alpha\beta + P\alpha\gamma;$$

S: the sum of the signal strength from a carbon atom in a side-chain methyl of every propylene unit;
$P\beta\beta$: 19.8-22.5 ppm;
$P\alpha\beta$: 18.0-17.5 ppm;
$P\alpha\gamma$: 17.5-17.1 ppm;
$\gamma$: *racemic* pentad chain: 20.7-20.3 ppm;
m: *meso* pentad chain: 21.7-22.5 ppm.

(B) [rrrr]/(1-[mmmm]) ≤ 0.1:

The value of [rrrr]/[1-mmmm] is obtained based on the fractions of the above-described pentad units and is an index indicating the uniform distribution of regularity in a low-crystalline polypropylene according to the present invention. When this value is large, a mixture of stereochemically regular polypropylene and atactic polypropylene has been produced, which is observed likewise in a conventional polypropylene produced using an existing catalyst system and causes a feeling of stickiness.
In cases where the value of [rrrr]/(1-[mmmm]) is not more than 0.1 in a low-crystalline polypropylene, the feeling of stickiness is reduced in an elastic nonwoven fabric to be obtained. From such a viewpoint, the value of [rrrr]/(1-[mmmm]) is preferably not more than 0.05 and more preferably not more than 0.04.

(c) [rmrm] > 2.5% by mole:

The *racemic meso racemic meso* pentad fraction [rmrm] of a low-crystalline polypropylene of more than 2.5% by mole results in increased randomness in the low-crystalline polypropylene and further improvement of the elastic recovery property of the elastic nonwoven fabric. The fraction [rmrm] is preferably not less than 2.6% by mole and more preferably not less than 2.7% by mole. The upper limit of the fraction is typically around 10% by mole.

(d) [mm] x [rr]/[mr]$^2$ ≤ 2.0:

The value of [mm] x [rr] / [mr]$^2$ represents an index indicating the randomness of a low-crystalline polypropylene. When this value is not more than 2.0, the elastic nonwoven fabric can have sufficient elastic recovery and the feeling of stickiness is also reduced. A value of [mm] x [rr]/[mr]$^2$ closer to 0.25 means more randomness. In order to gain the above-described sufficient elastic recovery property, the value of [mm] x [rr]/[mr]$^2$ is preferably more than 0.25 and 1.8 or less and more preferably 0.5-1.5.

(e) Mass-average molecular weight (Mw) = 10,000 to 200,000:

When the mass-average molecular weight is not less than 10,000 in a low-crystalline polypropylene, the viscosity of the low-crystalline polypropylene is not extremely low and is appropriate and therefore yarn breakage during producing an elastic nonwoven fabric is reduced. Moreover, when the mass-average molecular weight is not more than 200,000, the viscosity of the low-crystalline polypropylene is not extremely high and therefore the spinning property is improved. The mass-average molecular weight is preferably in a range of 30,000-150,000 and more preferably in a range of 50,000-150,000. The method to determine the mass-average molecular weight will be described below.

(f) Molecular-weight distribution (Mw/Mn) < 4:

When the molecular-weight distribution (Mw/Mn) is less than 4 in a low-crystalline polypropylene, generation of stickiness is reduced in an elastic nonwoven fabric. The molecular-weight distribution is preferably not more than 3. The mass-average molecular weight (Mw) is a mass-average molecular weight in terms of polystyrene equivalents, which is measured by the gel permeation chromatography (GPC) method using the following apparatus and conditions, and the molecular-weight distribution (Mw/Mn) is a value calculated from the number-average molecular weight (Mn) which is measured in the same manner and the mass-average molecular weight (Mw):

<GPC measuring apparatus>

Column: TOSO GMHHR-H(S)HT;
Detector: WATERS 150C, RI detector for liquid chromatograms;

<Measuring conditions>

Solvent: 1,2,4-trichlorobenzene;
Temperature during measurement: 145°C;
Flow rate: 1.0 ml/min;
Sample concentration: 2.2 mg/ml;
Injection volume: 160 $\mu$l;
Calibration curve: Universal Calibration;
Analysis program: HT-GPC (Ver. 1.0).

A low-crystalline polypropylene used in the present invention is preferred to further satisfy the condition (g) below: (g) the melting point (Tm-D) is in a range of 0-120°C, wherein the melting point is defined as a temperature corresponding to a top of a peak observed at the highest temperature side of a melting endothermic curve, which melting endothermic curve is obtained by a measurement using a differential scanning calorimeter (DSC), in which the temperature is raised at a rate of 10°C/min after keeping the temperature at -10°C for 5 min under nitrogen atmosphere.

In cases where the melting point (Tm-D) of a low-crystalline polypropylene is not less than 0°C, generation of stickiness is reduced in the elastic nonwoven fabric. Meanwhile, in cases where the melting point is not more than 120°C, sufficient elastic recovery can be obtained. From such a viewpoint, the melting point (Tm-D) is more preferably 0-100°C.

In addition, the melting point (Tm-D) can be obtained as a temperature corresponding to a top of a peak observed at the highest temperature side of a melting endothermic curve, which melting endothermic curve is obtained by a measurement using a differential scanning calorimeter (DSC-7; produced by PerkinElmer Inc.), in which the temperature of 10 mg of a sample is raised at a rate of 10°C/min after keeping the temperature at -10°C for 5 min under nitrogen atmosphere.

Such a low-crystalline polypropylene can be synthesized using a homogeneous catalyst referred to as a so-called metallocene catalyst as described in, for example, WO2003/087172.

Examples of the low-crystalline polypropylene as described above include, for example, L-MODU S901 (product name; produced by Idemitsu Kosan Co., Ltd.) or L-MODU S600 (product name; produced by Idemitsu Kosan Co., Ltd.) or the like.

<A fatty acid amide having not less than 15 and not more than 21 carbon atoms>

Examples of a fatty acid amide having not less than 15 and not more than 21 carbon atoms used in the present invention include fatty acid monoamide compounds, fatty acid diamide compounds, saturated fatty acid monoamide compounds, and unsaturated fatty acid diamide compounds. In the present invention, the term "carbon atom number" means the number of carbon atoms included in a molecule, particularly, palmitic acid amide (carbon atom number: 16), stearic acid amide (carbon atom number: 18), oleic acid amide (carbon atom number: 18), and the like. Multiple combinations of these amides can be used. The carbon atom in "-CONH", which is contained in an amide, is also counted in the number of carbon atoms of the amide. The carbon atom number of the fatty acid amide is more preferably not less than 15 and not more than 19.

In the present invention, oleic acid amide is especially preferred out of those fatty acid amide compounds. Using oleic acid amide enables a nonwoven fabric excellent in flexibility, texture, and strength to be obtained.

As a lubricant, a known one may be contained in addition to the above-described fatty acid amide. Examples of a known lubricant include fatty acid compounds, paraffin and hydrocarbon resins, silicon compounds, silicon polymers, fluorine compounds, fluorine-containing polymers such as a copolymer of tetrafluoroethylene and propylene and a copolymer of vinylidene fluoride and hexafluoropropylene, and the like, or a mixture thereof.

<Constitution of a composition>

A propylene polymer composition, which is a raw material of a spunbond nonwoven fabric according to the present invention, contains a propylene polymer (A) having a melting point of not less than 120°C and a fatty acid amide having not less than 15 and not more than 21 carbon atoms as essential components.

The propylene polymer composition contains, based on 100 parts by weight of the total of the propylene polymer (A) having a melting point of not less than 120°C and the propylene polymer (B) having a melting point of less than 120°C,

> 70-99.9 parts by weight of the propylene polymer (A) having a melting point of not less than 120°C and 0.1-30 parts by weight of the propylene polymer (B) having a melting point of less than 120°C;
> preferably 75-99 parts by weight of the propylene polymer (A) having a melting point of not less than 120°C and 1-25 parts by weight of the propylene polymer (B) having a melting point of less than 120°C; and
> more preferably 80-97 parts by weight of the propylene polymer (A) having a melting point of not less than 120°C and 3-20 parts by weight of the propylene polymer (B) having a melting point of less than 120°C.

A propylene polymer composition containing the propylene polymer (A) and the propylene polymer (B) in such a blending ratio, which further contains a particular fatty acid amide in combination with them, allows a nonwoven fabric having excellent flexibility, texture, and strength to be obtained.

Moreover, based on 100 parts by weight of the total of the propylene polymer (A) and the propylene polymer (B), the fatty acid amide having not less than 15 and not more than 21 carbon atoms is desired to be contained in a range of 0.01-1 part by weight, preferably of 0.05-0.60 part by weight, and further preferably of 0.10-0.40 part by weight. Even if an excess amount of the fatty acid amide is contained, reduction in strength and extreme decrease in static friction coefficient could occur. Moreover, in cases where the amount of the fatty acid amide is small, the flexibility could be insufficient.

The melt flow rate (MFR; measured at 230°C with a load of 2160 g in accordance with ASTM D-1238) of a composition prepared according to the above conditions is typically in a range of 1-150 g/10 min, more preferably of 10-100 g/10 min, and further preferably of 30-90 g/10 min.

Production of a propylene polymer composition

In manufacturing the nonwoven fabric of the present invention, a propylene polymer (A), a fatty acid amide having not less than 15 and not more than 21 carbon atoms and a propylene polymer (B) having a melting point of less than 120°C are kneaded in advance to produce a propylene polymer resin composition, followed by spinning of this propylene polymer composition and formation of a nonwoven fabric. In this step, the propylene polymer composition can be produced by adopting a method, in which each component in the range as described above is mixed by any of various known methods, such as a multi-stage polymerization method and a mixing method using a Henschel mixer, a V-blender, a ribbon blender, a tumble blender or the like, or alternatively in which each component in the range as described above is, after mixing them, melt kneaded with a single screw extruder, a double screw extruder, a kneader, a Banbury mixer or the like, followed by granulation or pulverization.

Moreover, an organic peroxide and the like as a degradation promoter (degrading agent) may be added as required in accordance with the production process of a nonwoven fabric in purpose of ensuring the formability. Moreover, the fluidity according to the production process of a nonwoven fabric to be selected may be obtained in response to a degradation promoter (degrading agent) added during the mixture.

To the propylene polymer composition of the present invention, additives including a weatherproof stabilizer, a thermostabilizer, an anti-slip agent, an anti-blocking agent, an anti-fogging agent, a pigment, a dye, a plasticizer, an anti-aging agent, a hydrochloric acid absorbent, an antioxidant, a hydrophilizing agent and the like may be combined as required in such a range as not to impair the purpose of the present invention. Moreover, any other polymer and the like can be combined in such a range as not to impair the purpose of the present invention as long as this does not depart from the spirit of the present invention.

Production process of a nonwoven fabric formed of a propylene polymer composition

From a propylene resin composition prepared as described above, a nonwoven fabric is produced by a spun-bonding method. The spun-bonding method is disclosed in JP-A-2007-46224, JP-A-2002-317372, JP-A-2003-302862, and JP-A-2001-355172, all of which belong to the present applicant.

The diameter of fibers, which constitute a nonwoven fabric, is normally selected to be around 0.1-100 $\mu$m. In a nonwoven fabric of the present invention, a relatively thin fiber (for example, of not more than 10 $\mu$m) and a relatively thick fiber (for example, of more than 10 $\mu$m) may be used by either mixing them or layering them. The diameter of fibers, which constitute a nonwoven fabric of the present invention, is not particularly limited and the fibers typically comprise continuous fibers in the spun-bonding method.

Fibers formed as described above can be entangled to produce a nonwoven fabric. Entangling treatment by means of, for example, needle punching, water jet treatment, ultrasonic sealing and the like, or thermal fusion bonding treatment by a thermal embossing roll can be carried out as a process for such entanglement. Entangling process by thermal fusion bonding treatment using a thermal embossing roll is particularly advantageous in the present invention. In case of thermal fusion bonding treatment by a thermal embossing roll, the area ratio of the embossing surface of the embossing roll is appropriately determined and is typically in a range of 5-30%.

Nonwoven fabric

Because a nonwoven fabric of the present invention obtained as described above is composed of a particular composition, the static friction coefficient thereof is in a range of 0.41-0.8.

In cases where the static friction coefficient is less than 0.41, the slipping property is extremely enhanced so much as to lose the productivity thereof. Moreover, in cases where the static friction coefficient is more than 0.8, the flexibility of a nonwoven fabric to be obtained could be insufficient. A nonwoven fabric according to the present invention gives a greater sense of softness as well as a greater sense of smoothness, hardly raises naps, and has quite excellent flexibility.

The bending resistance of the nonwoven fabric is typically not more than 37, preferably not more than 35, and further preferably not more than 31.

The basis weight (the mass per unit area of a nonwoven fabric) of the nonwoven fabric of the present invention is typically in a range of 3-100 g/m$^2$ and preferably of 7-60 g/m$^2$.

Fibers constituting the nonwoven fabric of the present invention may be monocomponent type fibers or conjugate fibers, such as sheath-core type, split type, sea-island type, and side-by-side type conjugate fibers, and in case of the conjugate fibers, a resin used to form a part of fibers may be a composition according to the present invention. Moreover, the cross-section of the fibers can take any of various known shapes, such as a circular shape, a square shape and the like. Furthermore, a nonwoven fabric of the present invention may be produced from a mixture of two or more different fibers, and in this case at least one fiber should be produced from a composition of the present invention.

Laminated nonwoven fabric material

A nonwoven fabric of the present invention (hereinafter sometimes referred to as "flexible nonwoven fabric" to discriminate it from ordinary nonwoven fabrics) laminated with various layers according to a usage is obtained.

Specifically, examples of the layer can include, for example, knitted fabrics, woven fabrics, nonwoven fabrics, films, and the like. In order to laminate (stick) the flexible nonwoven fabric on any other layer, any of various known methods can be adopted, including, for example, thermal fusion bonding treatments such as thermal embossing process, ultrasonic fusion bonding and the like; mechanical entangling methods such as needle punching, water jet treatment, and the like; methods using an adhesive agent such as a hot melt adhesive, an urethane adhesive and the like; extrusion lamination process; and the like.

Examples of a nonwoven fabric laminated with the flexible nonwoven fabric can include various known nonwoven fabrics, such as a spunbond nonwoven fabric, a meltblown nonwoven fabric, a wetlaid nonwoven fabric, a drylaid nonwoven fabric, an airlaid pulp nonwoven fabric, a flash-spun nonwoven fabric, a split yarn nonwoven fabric, and the like.

Exemplary raw materials constituting such nonwoven fabrics can include various known thermoplastic resins, for example, a polyolefin such as a high pressure low density polyethylene, a linear low density polyethylene (a so-called LLDPE), a high density polyethylene, polypropylene, a polypropylene random copolymer, poly(1-butene), poly(4-methyl-1-pentene), a random copolymer of ethylene and propylene, a random copolymer of ethylene and 1-butene, a random copolymer of propylene and 1-butene, and the like, all of which are homopolymers of an $\alpha$-olefin or copolymers of $\alpha$-olefins, such as ethylene, propylene, 1-butene, 1-hexene, 4-methyl-1-pentene and 1-octene and the like; polyester (polyethylene terephthalate, polybutylene terephthalate, polyethylene naphthalate and the like), polyamide (Nylon-6, Nylon-66, poly (m-xylene adipamide) and the like), polyvinyl chloride, polyimide, a copolymer of ethylene and vinyl acetate, polyacrylonitrile, polycarbonate, polystyrene, an ionomer, a thermoplastic polyurethane or a mixture thereof, and the like. Among these, a high pressure low density polyethylene, a linear low density polyethylene (a so-called LLDPE), a high density polyethylene, polypropylene, a polypropylene random compolymer, polyethylene terephthalate, polyamide and the like are preferred

Preferred embodiments of a laminated material comprising the flexible nonwoven fabric of the present invention include a laminated material comprising the same with a spunbond nonwoven fabric and/or a meltblown nonwoven fabric. Examples of the laminated material include, specifically, laminated materials comprising two layers composed of a spunbond nonwoven fabric/the flexible nonwoven fabric, of a meltblown nonwoven fabric/the flexible nonwoven fabric, and the like; laminated materials comprising three layers composed of the flexible nonwoven fabric/a spunbond nonwoven fabric/the flexible nonwoven fabric, of the flexible nonwoven fabric/a spunbond nonwoven fabric/a meltblown nonwoven fabric, of a spunbond nonwoven fabric/a meltblown nonwoven fabric/the flexible nonwoven fabric, of the flexible nonwoven fabric/a meltblown nonwoven fabric/the flexible nonwoven fabric, and the like; or laminated materials comprising four or more layers composed of the flexible nonwoven fabric/a spunbond nonwoven fabric/a meltblown nonwoven fabric/a spunbond nonwoven fabric, of the flexible nonwoven fabric/a spunbond nonwoven fabric/a meltblown nonwoven fabric/the flexible nonwoven fabric, and the like. The basis weight of each layer of nonwoven fabrics to be laminated is preferred to be in a range of 2-25 g/m². A spunbond nonwoven fabric comprising the above-described ultra-fine fibers is obtained by controlling (selecting) production conditions for spun-bonding. Such a laminated nonwoven fabric material turns to be a laminated material which makes good use of the flexibility of the flexible nonwoven fabric of the present invention and has excellent surface smoothness and an improved water-resisting property and/or workability.

Air permeating (moisture permeating) films are preferred as films to be laminated with the flexible nonwoven fabric of the present invention, which makes good use of the air permeability characteristic of the flexible nonwoven fabric of the present invention. Examples of such an air permeability film can include various known air permeability films, for example, a film having moisture permeability composed of a thermoplastic elastomer, such as a polyurethane elastomer, a polyester elastomer, a polyamide elastomer and the like; porous films produced by stretching a film made of a thermoplastic resin containing inorganic or organic fine particles to form multiple pores; and the like. A polyolefin such as a high pressure low density polyethylene, a linear low density polyethylene (a so-called LLDPE), a high density polyethylene, polypropylene, a polypropylene random copolymer, or a composition thereof and the like is preferred as thermoplastic resins used for the porous films.

A laminated material comprising an air permeability film laminated with the flexible nonwoven fabric of the present invention can turn to be a cloth-like composite material which makes good use of the bulkiness and the flexibility of the flexible nonwoven fabric and has a quite strong water-resisting property. The nonwoven fabric of the present invention is rich in flexibility so that it can be used for a wide variety of hygiene materials, a disposable diaper, a sanitary napkin, absorbent articles, a disposable mask, an adhesive bandage, a patch, a disposable gown for surgery, a fire fighter suit, and the like, a variety of medical films or sheets, a medical gown, a surgery cap, a disposable cap, and the like.

Now, specific applications of a nonwoven fabric of the present invention will be described in detail below by way of examples.

Absorbent articles

Absorbent articles, such as a disposable diaper or a sanitary napkin, require excellent feeling and good texture. Since the nonwoven fabric of the present invention has excellent flexibility, utilizing this flexibility allows the nonwoven fabric to be suitably used in parts including, specifically, the topsheet, backsheet, waistband (elongation tape, side flaps), fastening tape, three dimensional gather, leg cuff of a development-type disposable diaper or a pants-type disposable diaper, additionally the side panel of a pants-type disposable diaper, and the like. Using the present invention for those parts enables excellent texture to be obtained.

Disposable mask

A disposable mask is generally composed of a covering part, which covers a mouth and the surrounding area thereof, and ear loops, which extend from both sides of the covering part. Excellent texture is required for a mask because especially ear loops are in contact with the face of a wearer while he/she wears the mask. Since the nonwoven fabric of the present invention has excellent texture, the nonwoven fabric can meet those requirements by using it in ear loops of a disposable mask.

Adhesive bandage and patch

Base materials used in an adhesive bandage and the like have required sufficient air permeability, which prevents irritation of skin, and flexibility, which does not give a sense of stiffness. Since the nonwoven fabric of the present invention has air permeability as well as flexibility, the nonwoven fabric is suitably used as a base material for such an adhesive bandage and the like.

Disposable gown for surgery and fire fighter suit

The movable joint parts of a disposable gown for surgery, fire fighter suit or the like, such as the arm part, the elbow part, the shoulder part and the sleeve, require air permeability and flexibility. Since the nonwoven fabric of the present invention is a nonwoven fabric as well as an ordinary nonwoven fabric is and it has air permeability and also further excellent flexibility, the nonwoven fabric of the present invention is suitably used as a production material used in such a disposable gown for surgery, fire fighter suit and the like.

As described above, the nonwoven fabric of the present invention is a polypropylene nonwoven fabric excellent in flexibility and can be used as a nonwoven fabric for a wide variety of applications including hygiene materials.

The nonwoven fabric of the present invention has outstanding sensory properties including especially excellent texture, a greater sense of smoothness and softness, flexibility and the like, and achieves a good balance among them and therefore a fitting property which allows articles to follow the movement of the body is obtained in a diaper and/or a sanitary napkin. Furthermore, since the nonwoven fabric of the present invention is a nonwoven fabric and therefore has good air permeability, it can impart especially excellent performance to them.

EXAMPLES

Now, the present invention will be described more specifically with reference to Examples. However, the present invention is not limited to these Examples.

Physical properties and the like in Examples and Comparative Examples were determined by the methods below.

(1) Basis weight [g/m$^2$]

Five pieces of samples in a size of 100 mm (MD) x 100 mm (CD) were collected from a nonwoven fabric. Any five positions on the fabric were selected to collect the samples. The mass (g) of each collected sample piece was then measured using a scale electronic balance (produced by Kensei Co., Ltd.). The average mass of all sample pieces was obtained. The obtained average was converted to a mass (g) per 1m$^2$ and the resulting value was rounded to one decimal place to give the basis weight [g/m$^2$] of each nonwoven fabric sample.

(2) Thickness [$\mu$m]

Five pieces of samples in a size of 100 mm (MD) x 100 mm (CD) were collected from a nonwoven fabric. Any three positions on the fabric were selected to collect the samples. The thickness [$\mu$m] of each collected sample piece was then measured in accordance with JIS L 1096 by using a load-applying type thickness gauge (produced by Ozaki MFG Co., Ltd.). The average thickness of all sample pieces was obtained and rounded to the closest whole number to give the thickness [$\mu$m] of each nonwoven fabric sample.

(3) Fiber diameter [$\mu$m]

Five pieces of samples in a size of 10 mm (MD) x 10 mm (CD) were collected from a nonwoven fabric. Any one position on the fabric was selected to collect the samples. An image of each sample piece was then captured at 200x magnification under an optical microscope and the image was analyzed by image-based dimensional measurement software (Pixs2000 Version 2.0; produced by Inotech Co., Ltd.). The diameter was measured in ten fibers from each sample piece and the average fiber diameter of each sample piece was obtained. The obtained average was rounded to one decimal place to give the fiber diameter [$\mu$m] of each nonwoven fabric sample.

(4) LC value <Evaluation of flexibility>

Two pieces of samples in a size of 150 mm (MD) x 150 mm (CD) were collected from a nonwoven fabric. Any two positions on the fabric were selected to collect the samples. The sample pieces were then subjected to a compression test using a KES-FB system produced by Kato Tech Co., Ltd. to determine the LC value [-] under measuring conditions suitable for analyzing a knitted fabric with high sensitivity. The average LC value of all sample pieces was obtained and rounded to two decimal places to give the LC value [-] of each nonwoven fabric sample. The smaller LC value represents the smaller work per thickness done by compression at an early stage and more excellent flexibility.

(5) Static friction coefficient [-] <Evaluation of surface properties>

Each three pieces of samples in a size of 300 mm (MD) x 100 mm (CD) and in a size of 100 mm (MD) x 100 mm (CD) were collected from a nonwoven fabric. Any three positions (six positions in total) on the fabric were selected to collect the samples. Then, the static friction coefficient [-] was measured between the embossed surfaces of the both types of the sample pieces in accordance with JIS K 7125, in which a sample piece in a size of 100 mm (MD) x 100 mm (CD) was attached on a sliding piece to allow its embossed surface to face outward and a sample piece in a size of 300 mm (MD) x 100 mm (CD) was attached on a test bench to allow its embossed surface to be rubbed. The average static friction coefficient of all sample pieces was obtained and rounded to two decimal places to give the static friction coefficient [-] of each nonwoven fabric sample.

(6) Strength in CD [N/25 mm]

Five pieces of CD samples in a size of 25 mm (MD) x 200 mm (CD) were collected from each nonwoven fabric. Any five positions on the fabric were selected to collect the samples. Each collected sample piece was then stretched to determine the maximum load [N] by using a universal tensile tester (type IM-201; produced by INTESCO Co., Ltd.) under the following conditions: a chuck distance of 100 mm, a tensile speed of 100 mm/min. The average strength in CD of all sample pieces was obtained and rounded to one decimal place to give the strength in CD [N/25 mm] of each nonwoven fabric sample.

(7) Raised nap [score]

Two pieces of CD samples in a size of 150 mm (MD) x 150 mm (CD) were collected from each nonwoven fabric. Any two positions on the fabric were selected to collect the samples. Each collected sample piece was then subjected to a rubbing test using a Gakushin-type rubbing tester for color fastness (a new type product, NR-100; produced by Daiei Kagaku Seiki MFG Co., Ltd.) in accordance with the test method for color fastness to rubbing JIS L 0849. The non-embossed surface of each sample piece was reciprocally rubbed 50 times in machine direction (MD) with a cloth tape (No. 1532; produced by Teraoka Seisakusho Co., Ltd.) attached to a rubbing member, while a load of 300 g was applied to the sample piece. The appearance of the rubbed surface was ranked for raised nap in each sample piece based on the following criteria and the lesser rank was taken as the raised nap [score] of each nonwoven fabric sample:

Grade 1: fibers are taken away so that a sample piece is torn;
Grade 2: fibers are significantly taken away so that a sample piece is worn off;
Grade 2.5: large pills of fibers are clearly observed and some fibers start rising at multiple positions;
Grade 3: clear pills of fibers start to be formed and multiple small pills are observed;
Grade 3.5: naps are raised at such an extent that a small pill starts to be formed at one position;
Grade 4: no raised nap is observed.

(8) Texture

The texture of each nonwoven fabric was identified by 20 panelists and evaluated based on the following criteria:

A: in cases where 20 out of the twenty panelists felt a sense of flexibility;
B: in cases where 15 to 19 out of the twenty panelists felt a sense of flexibility;
C: in cases where 10 to 14 out of the twenty panelists felt a sense of flexibility;
D: in cases where 5 to 9 out of the twenty panelists felt a sense of flexibility;
E: in cases where 0 to 4 out of the twenty panelists felt a sense of flexibility.

(9) Bending resistance (Cantilever method)

Bending resistance test was in accordance with the method 8.19.1 A (45° cantilever method) in JIS1096.

Five pieces of samples each in a size of 2 cm x 15 cm were collected from each fabric sample both in its machine direction and in its cross direction. A sample piece was placed on the smooth surface of a horizontal stage having a downward slope at an angle of 45 degree on one end, such that the short side of the sample piece was aligned to the baseline of a scale on the stage. The sample piece was then gently slid toward the slope by any suitable way. When the central point of one end of the sample piece had reached the slope, the position of the other end was determined by reading the scale. The bending resistance of the sample piece is represented by the distance (mm) along which the sample piece has moved. Five sample pieces in each direction were used for the measurement and the average distances were obtained in machine direction (MD) and in cross direction (CD), respectively. The value obtained by the following equation was rounded to one decimal place to calculate the bending resistance of each sample fabric:

```
bending resistance = {([the average in MD]^2 + [the average in

CD]^2)/2]}^(1/2).
```

[Example 1] (Reference example, not part of the claimed invention)

A composition composed of 100 parts by weight of a crystalline PP (product name: Prime Polypro S119; melting point: 156°C, MFR (measured at 230°C with a load of 2.16 kg in accordance with ASTM D1238) : 62 g/10 min; produced by Prime Polymer Co., Ltd.; hereinafter abbreviated to "A1") and 0.15 part by weight of oleic acid amide (hereinafter abbreviated to "C1") added thereto was used to perform melt spinning by spun-bonding method.

A single screw extruder was used as an extruder and both a resin temperature and a dye temperature were set at 220°C, and a cooling air temperature was set at 20°C. At that time, the spinning speed was 2750 m/min.

Filaments obtained by melt spinning were deposited on a collection surface to produce a nonwoven fabric, followed by peeling off the produced nonwoven fabric from the collection surface. The nonwoven fabric was thermal-bonded by hot embossing technique using the following conditions to obtain a spunbond nonwoven fabric: a ratio of area occupied by embossing patterns of 6.7%, an area occupied by each embossed pattern of 0.19 mm$^2$, a heating temperature of 130°C, and a linear pressure of 60 kg/cm. The basis weight of the spunbond nonwoven fabric was 13.8 g/m$^2$. The obtained spunbond nonwoven fabric was evaluated by the above-described methods. The results of the evaluation are shown in Table 1.

[Example 2] (Reference example, not part of the claimed invention)

A spunbond nonwoven fabric was obtained by a similar method to that in Example 1 except that 0.30 part by weight of C1 was used, and the obtained spunbond nonwoven fabric was evaluated by the above-described methods. The results of the evaluation are shown in Table 1.

[Example 3]

After 90 parts by weight of A1 and 10 parts by weight of a propylene polymer (product name: L-MODU S901; melting point: 75°C, MFR (measured at 230°C with a load of 2.16 kg in accordance with ASTM D1238): 80 g/10 min; produced by Idemitsu Kosan Co., Ltd. ; hereinafter abbreviated to "B1") were blended, a composition composed of 100 parts by weight of the A1/B1 mixture and 0.30 part by weight of C1 added thereto was used to obtain a spunbond nonwoven fabric by a similar method to that in Example 1 and the obtained spunbond nonwoven fabric was evaluated by the above-described methods. The results of the evaluation are shown in Table 1.

[Example 4]

A spunbond nonwoven fabric was obtained by a similar method to that in Example 3 except that the blending ratio of A1 to B1 was changed to a ratio of 80:20 in parts by weight, and the obtained spunbond nonwoven fabric was evaluated by the above-described methods. The results of the evaluation are shown in Table 1.

[Example 5]

After 90 parts by weight of A1 and 10 parts by weight of a propylene polymer (product name: L-MODU S600; melting point: 70°C, MFR (measured at 230°C with a load of 2.16 kg in accordance with ASTM D1238): 300 g/10 min; produced by Idemitsu Kosan Co., Ltd.; hereinafter abbreviated to "B2") were blended, a composition composed of 100 parts by weight of the A1/B2 mixture and 0.30 part by weight of C1 added thereto was used to obtain a spunbond nonwoven fabric by a similar method to that in Example 1 and the obtained spunbond nonwoven fabric was evaluated by the above-described methods. The results of the evaluation are shown in Table 1.

[Example 6]

After 90 parts by weight of A1 and 10 parts by weight of a propylene polymer (product name: TAFMER XM-7070; melting point: 75°C, MFR (measured at 230°C with a load of 2.16 kg in accordance with ASTM D1238) : 7 g/10 min; produced by Mitsui Chemicals, Inc. ; hereinafter abbreviated to "B3") were blended, a composition composed of 100 parts by weight of the A1/B3 mixture and 0.30 part by weight of C1 added thereto was used to obtain a spunbond nonwoven fabric by a similar method to that in Example 1 and the obtained spunbond nonwoven fabric was evaluated by the above-described methods. The results of the evaluation are shown in Table 2.

[Example 7]

A spunbond nonwoven fabric was obtained by a similar method to that in Example 6 except that the blending ratio of A1 to B3 was changed to a ratio of 80:20 in parts by weight, and the obtained spunbond nonwoven fabric was evaluated by the above-described methods. The results of the evaluation are shown in Table 2.

[Example 8] (Reference example, not part of the claimed invention)

After 80 parts by weight of A1 and 20 parts by weight of a propylene polymer (product name: Vistamaxx VM2125; melting point: 160°C, MFR (measured at 230°C with a load of 2.16 kg in accordance with ASTM D1238) : 60 g/10 min; produced by Exxon Mobil Co.; hereinafter abbreviated to "A2") were blended, a composition composed of 100 parts by weight of the A1/A2 mixture and 0.30 part by weight of C1 added thereto was used to obtain a spunbond nonwoven fabric by a similar method to that in Example 1 and the obtained spunbond nonwoven fabric was evaluated by the above-described methods. The results of the evaluation are shown in Table 2.

[Comparative Example 1]

A composition composed of 100 parts by weight of A1 and 0.15 part by weight of erucic acid amide (hereinafter abbreviated to "C2") added thereto was used to obtain a spunbond nonwoven fabric by a similar method to that in Example 1, and the obtained spunbond nonwoven fabric was evaluated by the above-described methods. The results of the evaluation are shown in Table 3.

[Comparative Example 2]

A spunbond nonwoven fabric was obtained by a similar method to that in Comparative Example 1 except that 0.30 part by weight of C2 was used, and the obtained spunbond nonwoven fabric was evaluated by the above-described methods. The results of the evaluation are shown in Table 3.

[Comparative Example 3]

A spunbond nonwoven fabric was obtained by a similar method to that in Comparative Example 1 except that 0.45 part by weight of C2 was used, and the obtained spunbond nonwoven fabric was evaluated by the above-described methods. The results of the evaluation are shown in Table 3.

[Comparative Example 4]

After 90 parts by weight of A1 and 10 parts by weight of B1 were blended, a composition composed of 100 parts by weight of the A1/B1 mixture and 0.30 part by weight of C2 added thereto was used to obtain a spunbond nonwoven fabric by a similar method to that in Example 1, and the obtained spunbond nonwoven fabric was evaluated by the above-described methods. The results of the evaluation are shown in Table 3.

[Comparative Example 5]

A spunbond nonwoven fabric was obtained by a similar method to that in Comparative Example 4 except that B1 used in Comparative Example 4 was changed to B2, and the obtained spunbond nonwoven fabric was evaluated by the above-described methods. The results of the evaluation are shown in Table 3.

[Comparative Example 6]

A spunbond nonwoven fabric was obtained by a similar method to that in Comparative Example 4 except that B1 used in Comparative Example 4 was changed to B3, and the obtained spunbond nonwoven fabric was evaluated by the above-described methods. The results of the evaluation are shown in Table 3.

[Table 1]

| Example/Comparative Example | | Example 1* | Example 2* | Example 3 | Example 4 | Example 5 |
|---|---|---|---|---|---|---|
| Composition | Propylene Polymer (A) | A1 | A1 | A1 | A1 | A1 |
| | Melting Point (°C) | 156 | 156 | 156 | 156 | 156 |
| | MFR (g/10 min) | 62 | 62 | 62 | 62 | 62 |
| | Blending Ratio (% by weight) | 100 | 100 | 90 | 80 | 90 |
| | Propylene Polymer (B) | - | - | B1 | B1 | B2 |
| | Melting Point (°C) | - | - | 75 | 75 | 70 |
| | MFR (g/10 min) | - | - | 80 | 80 | 300 |
| | Blending Ratio (% by weight) | - | - | 10 | 20 | 10 |
| | Fatty Acid Amide | C1 | C1 | C1 | C1 | C1 |
| | Carbon Atom Number | 18 | 18 | 18 | 18 | 18 |
| | Blending Ratio (% by weight) | 0.15 | 0.30 | 0.30 | 0.30 | 0.30 |
| Basis Weight (gsm) | | 14.2 | 14.1 | 13.6 | 13.3 | 13.8 |
| Thickness (μm) | | 244 | 228 | 226 | 204 | 216 |
| Fiber Diameter (μm) | | 15.8 | 15.8 | 15.3 | 15.8 | 15.3 |
| LC Value (-) | | 0.35 | 0.35 | 0.32 | 0.33 | 0.35 |
| Static Friction Coefficient (-) | | 0.54 | 0.74 | 0.45 | 0.43 | 0.46 |
| Strength in CD (N/25 mm) | | 5.7 | 5.6 | 5.3 | 5.8 | 5.6 |
| Raised Nap (score) | | 4 | 3.5 | 4 | 3.5 | 3.5 |
| Texture (-) | | B | B | A | A | A |
| Bending Resistance (mm) | | 36.7 | 35.8 | 28.8 | 27.8 | 27.9 |

*Reference example, not part of the claimed invention.

EP 2 902 538 B1

[Table 2]

| Example/Comparative Example | | Example 6 | Example 7 | Example 8* |
|---|---|---|---|---|
| Composition | Propylene Polymer (A) | A1 | A1 | A1 |
| | Melting Point (°C) | 156 | 156 | 156 |
| | MFR (g/10 min) | 62 | 62 | 62 |
| | Blending Ratio (% by weight) | 90 | 80 | 80 |
| | Propylene Polymer (B) | B3 | B3 | A2 |
| | Melting Point (°C) | 75 | 75 | 160 |
| | MFR (g/10 min) | 7 | 7 | 60 |
| | Blending Ratio (% by weight) | 10 | 20 | 20 |
| | Fatty Acid Amide | C1 | C1 | C1 |
| | Carbon Atom Number | 18 | 18 | 18 |
| | Blending Ratio (% by weight) | 0.30 | 0.30 | 0.30 |
| Basis Weight (gsm) | | 13.1 | 13.0 | 13.8 |
| Thickness (μm) | | 216 | 210 | 236 |
| Fiber Diameter (μm) | | 15.3 | 15.8 | 15.8 |
| LC Value (-) | | 0.32 | 0.33 | 0.34 |
| Static Friction Coefficient (-) | | 0.46 | 0.48 | 0.48 |
| Strength in CD (N/25 mm) | | 5.2 | 6.3 | 4.0 |
| Raised Nap (score) | | 3.5 | 3.5 | 3.5 |
| Texture (-) | | A | A | A |
| Bending Resistance (mm) | | 34.2 | 33.8 | 31.3 |

*Reference example, not part of the claimed invention.

[Table 3]

| Example/Comparative Example | | | Comparative Example 1 | Comparative Example 2 | Comparative Example 3 | Comparative Example 4 | Comparative Example 5 | Comparative Example 6 |
|---|---|---|---|---|---|---|---|---|
| Composition | | Propylene Polymer (A) | A1 | A1 | A1 | A1 | A1 | A1 |
| | | Melting Point (°C) | 156 | 156 | 156 | 156 | 156 | 156 |
| | | MFR (g/10 min) | 62 | 62 | 62 | 62 | 62 | 62 |
| | | Blending Ratio (% by weight) | 100 | 100 | 100 | 90 | 90 | 90 |
| | | Propylene Polymer (B) | - | - | - | B1 | B2 | B3 |
| | | Melting Point (°C) | - | - | - | 75 | 70 | 75 |
| | | MFR (g/10 min) | - | - | - | 60 | 300 | 7 |
| | | Blending Ratio (% by weight) | - | - | - | 10 | 10 | 10 |
| | | Fatty Acid Amide | C2 | C2 | C2 | C2 | C2 | C2 |
| | | Carbon Atom Number | 22 | 22 | 22 | 22 | 22 | 22 |
| | | Blending Ratio (% by weight) | 0.15 | 0.30 | 0.45 | 0.30 | 0.30 | 0.30 |
| Basis Weight (gsm) | | | 14.2 | 13.8 | 14.4 | 13.6 | 13.4 | 13.2 |
| Thickness (μm) | | | 244 | 236 | 240 | 234 | 210 | 226 |
| Fiber Diameter (μm) | | | 15.8 | 15.8 | 15.8 | 15.3 | 15.3 | 15.3 |
| LC Value (-) | | | 0.41 | 0.38 | 0.37 | 0.37 | 0.38 | 0.37 |
| Static Friction Coefficient (-) | | | 0.49 | 0.43 | 0.38 | 0.58 | 0.57 | 0.59 |
| Strength in CD (N/25 mm) | | | 5.4 | 5.2 | 5.0 | 4.1 | 4.0 | 4.0 |
| Raised Nap (score) | | | 3.5 | 3.5 | 3 | 3.5 | 3.5 | 3.5 |
| Texture (-) | | | E | D | D | E | E | E |
| Bending Resistance (mm) | | | 38.7 | 37.8 | 36.4 | 25.6 | 28.8 | 30.5 |

EP 2 902 538 B1

According to the above Examples, the nonwoven fabrics in accordance with the present invention resulted in showing excellent texture, causing less raised nap, achieving an excellent balance between its static friction coefficient and strength, and showing excellent flexibility and bending resistance as well.

INDUSTRIAL APPLICABILITY

The spunbond nonwoven fabrics of the present invention are suitably used for a wide variety of textile products, such as for example disposable diapers, sanitary napkins, hygiene products, clothing materials, surgical dressings, wrapping materials and the like.

**Claims**

1. A spunbond nonwoven fabric comprising a propylene polymer composition comprising a propylene polymer (A) having a melting point of not less than 120°C, a propylene polymer (B) having a melting point of less than 120°C and a fatty acid amide having not less than 15 and not more than 21 carbon atoms.

2. The spunbond nonwoven fabric according to claim 1, wherein the fatty acid amide having not less than 15 and not more than 21 carbon atoms is oleic acid amide.

3. The spunbond nonwoven fabric according to claim 1 or 2, wherein the propylene polymer composition comprises, based on 100 parts by weight of the total of the propylene polymer (A) having a melting point of not less than 120°C and the propylene polymer (B) having a melting point of less than 120°C,
the propylene polymer (A) having a melting point of not less than 120°C in a range of 70 to 99.9 parts by weight;
the propylene polymer (B) having a melting point of less than 120°C in a range of 30 to 0.1 parts by weight; and
the fatty acid amide having not less than 15 and not more than 21 carbon atoms in a range of 0.01 to 1 part by weight.

4. The spunbond nonwoven fabric according to any one of claims 1 to 3, wherein the propylene polymer (B) having a melting point of less than 120°C is a propylene homopolymer or a random copolymer composed of propylene and an $\alpha$-olefin having carbon atoms of 4 to 20.

5. The spunbond nonwoven fabric according to claim 4, wherein the propylene polymer (B) having a melting point of less than 120°C is a random copolymer composed of propylene and an $\alpha$-olefin having carbon atoms of 4 to 20.

6. The spunbond nonwoven fabric according to claim 5, wherein the content of the $\alpha$-olefin in the copolymer is 0.1% by mole or more and less than 90% by mole.

7. The spunbond nonwoven fabric according to any one of claims 1 to 3, wherein the propylene polymer (B) having a melting point of less than 120°C is a low-crystalline polypropylene which satisfies the following conditions (A) to (f):

   (A) [mmmm] = 20-60% by mole;
   (B) [rrrr] / (1- [mmmm]) $\leq$ 0.1;
   (c) [rmrm] > 2.5% by mole;
   (d) [mm] x [rr]/[mr]$^2$ $\leq$ 2.0;
   (e) mass-average molecular weight (Mw) = 10,000 to 200,000;
   (f) molecular-weight distribution (Mw/Mn) < 4.

8. The spunbond nonwoven fabric according to claim 4, wherein the propylene homopolymer of the propylene polymer (B) having a melting point of less than 120°C is a low-crystalline polypropylene which satisfies the following conditions (A) to (f) :

   (A) [mmmm] = 20-60% by mole;
   (B) [rrrr]/(1-[mmmm]) $\leq$ 0.1;
   (c) [rmrm] > 2.5% by mole;
   (d) [mm] x [rr] / [mr]$^2$ $\leq$ 2.0;
   (e) mass-average molecular weight (Mw) = 10,000 to 200,000;
   (f) molecular-weight distribution (Mw/Mn) < 4.

9. The spunbond nonwoven fabric according to any one of claims 1 to 8, wherein the propylene polymer (A) having a melting point of not less than 120°C is a propylene homopolymer or a random copolymer composed of propylene and an α-olefin.

10. The spunbond nonwoven fabric according to any one of claims 1 to 8, comprising a propylene homopolymer and a random copolymer composed of propylene and an α-olefin as the propylene polymer (A) having a melting point of not less than 120°C.

11. A laminated nonwoven fabric material comprising the spunbond nonwoven fabric according to any one of claims 1 to 10.

12. An absorbent article using the spunbond nonwoven fabric according to any one of claims 1 to 10.

**Patentansprüche**

1. Spinnvliesstoff, umfassend eine Propylenpolymerzusammensetzung, die ein Propylenpolymer (A) mit einem Schmelzpunkt von nicht weniger als 120°C, ein Propylenpolymer (B) mit einem Schmelzpunkt von weniger als 120°C und ein Fettsäureamid mit nicht weniger als 15 und nicht mehr als 21 Kohlenstoffatomen umfasst.

2. Spinnvliesstoff gemäß Anspruch 1, wobei das Fettsäureamid mit nicht weniger als 15 und nicht mehr als 21 Kohlenstoffatomen Ölsäureamid ist.

3. Spinnvliesstoff gemäß Anspruch 1 oder 2, wobei die Propylenpolymerzusammensetzung bezogen auf 100 Gewichtsteile der Gesamtmenge des Propylenpolymers (A) mit einem Schmelzpunkt von nicht weniger als 120°C und des Propylenpolymer (B) mit einem Schmelzpunkt von weniger als 120°C
das Propylenpolymer (A) mit einem Schmelzpunkt von nicht weniger als 120°C in einem Bereich von 70 bis 99,9 Gewichtsteilen;
das Propylenpolymer (B) mit einem Schmelzpunkt von weniger als 120°C in einem Bereich von 30 bis 0,1 Gewichtsteilen; und
das Fettsäureamid mit nicht weniger als 15 und nicht mehr als 21 Kohlenstoffatomen in einem Bereich von 0,01 bis 1 Gewichtsteil umfasst.

4. Spinnvliesstoff gemäß einem der Ansprüche 1 bis 3, wobei das Propylenpolymer (B) mit einem Schmelzpunkt von weniger als 120°C ein Propylenhomopolymer oder ein statistisches Copolymer, gebildet aus Propylen und einem α-Olefin mit 4 bis 20 Kohlenstoffatomen, ist.

5. Spinnvliesstoff gemäß Anspruch 4, wobei das Propylenpolymer (B) mit einem Schmelzpunkt von weniger als 120°C ein statistisches Copolymer, gebildet aus Propylen und einem α-Olefin mit 4 bis 20 Kohlenstoffatomen, ist.

6. Spinnvliesstoff gemäß Anspruch 5, wobei in dem Copolymer der Gehalt des α-Olefins 0,1 Mol-% oder mehr und weniger als 90 Mol-% beträgt.

7. Spinnvliesstoff gemäß einem der Ansprüche 1 bis 3, wobei das Propylenpolymer (B) mit einem Schmelzpunkt von weniger als 120°C ein niedrigkristallines Polypropylen ist, das die folgenden Bedingungen (A) bis (f) erfüllt:

(A) [mmmm] = 20-60 Mol-%;
(B) $[rrrr]/(1-[mmmm]) \leq 0,1$;
(c) [rmrm] > 2,5 Mol-%;
(d) $[mm] \times [rr]/[mr]^2 \leq 2,0$;
(e) gewichtsmittleres Molekulargewicht (Mw) = 10.000 bis 200.000 ;
(f) Molekulargewichtsverteilung (Mw/Mn) < 4.

8. Spinnvliesstoff gemäß Anspruch 4, wobei das Propylenhomopolymer des Propylenpolymers (B) mit einem Schmelzpunkt von weniger als 120°C ein niedrigkristallines Polypropylen ist, das die folgenden Bedingungen (A) bis (f) erfüllt:

(A) [mmmm] = 20-60 Mol-%;
(B) $[rrrr]/(1-[mmmm]) \leq 0,1$;

(c) [rmrm] > 2,5 Mol-%;
(d) [mm] x [rr]/[mr]$^2 \leq$ 2,0;
(e) gewichtsmittleres Molekulargewicht (Mw) = 10.000 bis 200.000;
(f) Molekulargewichtsverteilung (Mw/Mn) < 4.

9.  Spinnvliesstoff gemäß einem der Ansprüche 1 bis 8, wobei das Propylenpolymer (A) mit einem Schmelzpunkt von nicht weniger als 120°C ein Propylenhomopolymer oder ein statistisches Copolymer, gebildet aus Propylen und einem $\alpha$-Olefin, ist.

10. Spinnvliesstoff gemäß einem der Ansprüche 1 bis 8, umfassend ein Propylenhomopolymer und ein statistisches Copolymer, gebildet aus Propylen und einem $\alpha$-Olefin, als Propylenpolymer (A) mit einem Schmelzpunkt von nicht weniger als 120°C.

11. Laminiertes Vliesstoffmaterial, umfassend den Spinnvliesstoff gemäß einem der Ansprüche 1 bis 10.

12. Absorbierender Artikel, der den Spinnvliesstoff gemäß einem der Ansprüche 1 bis 10 verwendet.

**Revendications**

1.  Tissu non tissé filé-lié comprenant une composition de polymère de propylène comprenant un polymère de propylène (A) ayant un point de fusion de pas moins de 120 °C, un polymère de propylène (B) ayant un point de fusion de moins de 120 °C et un amide d'acide gras n'ayant pas moins de 15 et pas plus de 21 atomes de carbone.

2.  Tissu non tissé filé-lié selon la revendication 1, dans lequel l'amide d'acide gras n'ayant pas moins de 15 et pas plus de 21 atomes de carbone est un amide d'acide oléique.

3.  Tissu non tissé filé-lié selon la revendication 1 ou 2, dans lequel la composition de polymère de propylène comprend, sur la base de 100 parties en poids du total du polymère de propylène (A) ayant un point de fusion de pas moins de 120 °C et du polymère de propylène (B) ayant un point de fusion de moins de 120 °C,
le polymère de propylène (A) ayant un point de fusion de pas moins de 120 °C dans une plage de 70 à 99,9 parties en poids ;
le polymère de propylène (B) ayant un point de fusion de moins de 120 °C dans une plage de 30 à 0,1 partie en poids ; et
l'amide d'acide gras n'ayant pas moins de 15 et pas plus de 21 atomes de carbone dans une plage de 0,01 à 1 partie en poids.

4.  Tissu non tissé filé-lié selon l'une quelconque des revendications 1 à 3, dans lequel le polymère de propylène (B) ayant un point de fusion de moins de 120 °C est un homopolymère de propylène ou un copolymère aléatoire composé de propylène et d'une $\alpha$-oléfine ayant 4 à 20 atomes de carbone.

5.  Tissu non tissé filé-lié selon la revendication 4, dans lequel le polymère de propylène (B) ayant un point de fusion de moins de 120 °C est un copolymère aléatoire composé de propylène et d'une $\alpha$-oléfine ayant 4 à 20 atomes de carbone.

6.  Tissu non tissé filé-lié selon la revendication 5, dans lequel la teneur de l'$\alpha$-oléfine dans le copolymère est de 0,1 % en mole ou plus et moins de 90 % en mole.

7.  Tissu non tissé filé-lié selon l'une quelconque des revendications 1 à 3, dans lequel le polymère de propylène (B) ayant un point de fusion de moins de 120 °C est un polypropylène faiblement cristallin qui répond aux conditions suivantes (A) à (f) :

    (A) [mmmm] = 20 à 60 % en mole ;
    (B) [rrrr]/(1-[mmmm]) $\leq$ 0,1;
    (c) [rmrm] > 2,5 % en mole ;
    (d) [mm] x [rr]/[mr]2 $\leq$ 2,0 ;
    (e) poids moléculaire moyen en masse (Mw) = 10 000 à 200 000 ;
    (f) distribution de poids moléculaire (Mw/Mn) < 4.

**8.** Tissu non tissé filé-lié selon la revendication 4, dans lequel l'homopolymère de propylène du polymère de propylène (B) ayant un point de fusion de moins de 120 °C est un polypropylène faiblement cristallin qui répond aux conditions suivantes (A) à (f) :

(A) [mmmm] = 20 à 60 % en mole ;
(B) [rrrr]/(1-[mmmm]) ≤ 0,1;
(c) [rmrm] > 2,5 % en mole ;
(d) [mm] x [rr]/[mr]2 ≤ 2,0 ;
(e) poids moléculaire moyen en masse (Mw) = 10 000 à 200 000 ;
(f) distribution de poids moléculaire (Mw/Mn) < 4.

**9.** Tissu non tissé filé-lié selon l'une quelconque des revendications 1 à 8, dans lequel le polymère de propylène (A) ayant un point de fusion de pas moins de 120 °C est un homopolymère de propylène ou un copolymère aléatoire composé de propylène et d'une $\alpha$-oléfine.

**10.** Tissu non tissé filé-lié selon l'une quelconque des revendications 1 à 8, comprenant un homopolymère de propylène et un copolymère aléatoire composé de propylène et d'une $\alpha$-oléfine comme polymère de propylène (A) ayant un point de fusion de pas moins de 120 °C.

**11.** Matériau de tissu non tissé stratifié comprenant le tissu non tissé filé-lié selon l'une quelconque des revendications 1 à 10.

**12.** Article absorbant utilisant le tissu non tissé filé-lié selon l'une quelconque des revendications 1 à 10.

## REFERENCES CITED IN THE DESCRIPTION

### Patent documents cited in the description

- JP 2001226865 A
- JP 2002069820 A
- JP 5194802 A
- JP 2002146631 A
- JP 2005126858 A
- JP 2008524387 A
- WO 201207518 A
- JP 2002105828 A
- US 2009098786 A1
- WO 2003087172 A
- JP 2007046224 A
- JP 2002317372 A
- JP 2003302862 A
- JP 2001355172 A

### Non-patent literature cited in the description

- **A. ZAMBELLI et al.** *Macromolecules,* 1973, vol. 6, 925
- **A. ZAMBELLI et al.** *Macromolecules,* 1975, vol. 8, 687